Europäisches Patentamt

European Patent Office

Office européen des brevets

(11) Publication number: **0 669 078 A1**

# EUROPEAN PATENT APPLICATION

(21) Application number: **94102731.0**

(51) Int. Cl.6: **A01N 25/02**

(22) Date of filing: **23.02.94**

(43) Date of publication of application:
**30.08.95 Bulletin 95/35**

(84) Designated Contracting States:
**AT BE CH DE DK ES FR GB GR IE IT LI LU MC NL PT SE**

(71) Applicant: **MAKHTESHIM CHEMICAL WORKS LIMITED**
**P.O. Box 60**
**84100 Beer Sheva (IL)**

(72) Inventor: **Lubetzky, David**
**9, Lotem Street**
**Lehavim (IL)**
Inventor: **Frances, Maurice**
**7, David Yelin Street**
**Ramot,**
**Beer-Sheva (IL)**

(74) Representative: **Josif, Albert, Dr.-Ing. et al**
**Baaderstrasse 3**
**D-80469 München (DE)**

(54) **Low ecotoxic emulsifiable concentrate formulations of pesticides.**

(57) In accordance with the present invention there is provided an EC pesticidal formulation comprising:
(1) at least one pesticide having melting point of 130°C or less;
(2) a plasticizer selected from the group consisting of rosin or rosin derivatives insoluble in water;
(3) at least one surfacant; and
(4) at least one polaric solvent completely or partially soluble in water to make up to one liter.
This affords EC formulations which have low irritation and suprisingly improved biological activity to target species.

EP 0 669 078 A1

Rank Xerox (UK) Business Services
(3.10/3.09/3.3.4)

## BACKGROUND OF THE INVENTION

The present invention relates to specific types of pesticidal formulations which are emulsions in water. The present invention particularly relates to pesticidal formulations emulsifiable in Water, EC for Emulsifiable Concentrates containing specific types of plasticizers such as rosin and rosin derivatives; their preparation and their application to pesticides having low or medium melting points.

Solid pesticides having a low or medium melting point are generally commercialized as emulsifiable concentrate formulations. However, such formulations require considerable quantities of organic solvents such as aromatic hydrocarbons, chlorinated hydrocarbons, etc. which are known for their toxicological and ecotoxicological properties, creating toxicological and ecotoxicological problems.

Thus, the United States Environmental Protection Agency has recently begun a review of the ingredients of pesticidal formulations other than the active ingredient. In Europe, the E.E.C. Council is in an advanced stage of legislating into law volatile organic compounds (VOC) and to require the eco-labelling of formulations which contain such VOC's. Indeed, Canada and Germany already have a system of ecotoxic labelling.

To overcome the need to use such aromatic or chlornated hydrocarbons, replacement solvents have been attempted or used. Examples of such substitutes are aliphatic hydrocarbons, alcohols, glycols, polyglycols, glycol ethers, ketones and high solvent power polaric solvents such as $\gamma$-butyrolactone, N-methyl pyrolictone and the like.

Aliphatic hydrocarbons suffer from their generally low solvent power to solid pesticides. The other solvents listed, while suitable to solubilize the pesticide, are themselves soluble in water. Such solubility in water (when the EC formulation is diluted to prepare the spray) causes the phenomenon of crystallization of the pesticide. Such crystallization makes the formulation unsuitable for spraying.

Rosin and its derivatives have been known since ancient times and they have found safe uses for a wide variety of products, including food and cosmetics. Uses in agriculture are also known as follows:

Great Britain patent no. 1,044,663 describes the use of a rosin or its derivatives in organophosphorous insecticidal compositions, but said compositions require the use of organic solvents.

Great Britain patent number 1,382,894 describes the use of rosin or its derivatives in carbamic ester compositions, but said compositions also require the use of organic solvents. The same can be said for the compositions described in Great Britain patent number 1,051,360 (Chemical Abstracts, 66: 54559v) and Soviet Union patent number 733,596 (Chemical Abstracts, 93: 127147d).

Rosin or its derivatives have been reported to be tackifier agents in pesticidal formulations, such as in Great Britain patent number 1,398,227; United States patent number 4,211,566; and Soviet Union patent number 1,187,773 (Chemical Abstracts, 104: 10445a). In addition, rosin or its derivatives have also been reported in pesticidal powder formulations. Examples are: Japan Patent Kokai Publication number 76/19,132 (Chemical Abstracts, 84: 175194c) ; Japan Patent Kokai Publication number 63/250,308 (Chemical Abstracts, 111: 92336a); and Chinese patent publication number 1,031,467 (Chemical Abstracts, 113: 19497r).

Rosin derivatives have been reported to improve the fungal resistance of polymers in Chemical Abstracts, 86: 156376p.

European patent publication numbers 432,061 and 432,062 recently disclosed aqueous emulsions of a large variety of agrochemicals. However, said compositions did not require the use of rosin and still required the use of undesirable organic solvents.

United States Patent Number 2,291,205 describes a formulation of a liquid pesticide (pine oil) using a metal salt of rosin for a liquid active ingredient and not a solid one. What works well for a liquid pesticide may not necessarily work for a solid pesticide in an EW formulation.

United States Patent Number 2,490,925 describes a formulation where the rosin or rosin derivative is the active pesticide. In the present invention the rosin is used as a plasticizer. Thus, US 2,490,925 is not relevant to the present invention.

United States Patent Number 4,957,533 describes the use of-among a large number of compounds - rosin derivatives as solvents to formulation of a special group of compounds. But this patent does not exemplify a single case where rosin derivatives are used.

## SUMMARY OF THE INVENTION

In accordance with the present invention there is provided an EC pesticidal formulation comprising:
(1) 45 g/l to 675 g/l of at least one pesticide having melting point of 130°C or less;
(2) 5 g/l to 525 g/l of a plasticizer selected from the group consisting of rosin or rosin derivatives insoluble in water;

(3) 40 g/l to 300 g/l of at least one surfactant; and

(4) at least one polaric solvent completely or partially soluble in water to make up to one liter.

The present invention is applicable to pesticides which, in their pure state, are solid at room temperature and have a melting point of about 130°C or less.

DETAILED DESCRIPTION OF THE INVENTION

Suitable pesticides useful in the present invention can be selected for example from the following classes of pesticidal active substances:

acetanilides

benzoates

benzofurans

brominated benzilates

chlorinated benzilates

chlorinated hydrocarbons

hydroxybenzonitriles

imidazoles

nitroanilines

nitro-xylenes

organophosphorous compounds

oxidizoles

phenoxy-phenoxy-alkane-carboxylic acid derivatives

pyrethroids and

triazoles

Suitable acetanilides are in particular compounds of the type described in United States patent numbers 3,442,945 and 3,547,620, especially 2-chloro-2'6'-diethyl-N-(methoxymethyl)-acetanilide (alachlor). Suitable benzoates are in particular compounds of the type described in Great Britain patent number 1,247,817 especially 3-chloro- -ethoxyimino-2,6-dimethyloxy-benzyl benzoate (benzoximate). Suitable benzofurans are in particular compounds of the type described in Great Britain patent number 1,271,659, especially ±-2-ethoxy-2,3-dihydro-3,3-dimethyl-5-benzofuranyl methane sulfonate (ethofumesate). Suitable brominated benzilates are in particular compounds of the type described in Great Britain patent number 1,178,850, especially isopropyl-4,4'-dibromobenzilate bromopropy-late). Suitable chlorinated benzilates are in particular compounds of the type described in Great Britain patent number 705,037, especially ethyl-4,4'-dichloro-benzilate (chlorobenzilate). Suitable chlorinated hydrocarbons are in particular compounds of the type described in United States patent number 2,799,685, especially 6,7,8,9,10,10-hexachloro-1,5,5a,6,9,9a-hexahydro-6,9-methano-2,4,3-benzo-diorathiepin-3- oxide (endosulfan). Suitable hydroxybenzonitriles are in particular compounds of the type described in United States patent numbers 3,397,054 and 4,332,613, especally the esters of 3,5-dibromo-4-hydroxyphenyl cyanide (bromoxynil) and 3,5-diiodo-4-hydroxyphenyl cyanide (ioxynil). Suitable imidazoles are in particular compounds of the type described in Great Britain patent number 1,469,772, especially N-propyl-N-[2-(2,4,6-trichlorophenoxy)-ethyl]-1H-imidazole-1-carboxamide; also compounds described in United States patent number 3,658,813, especially 1-[2-(2,4-dichlorophenyl)-2-(2-propenyloxy)-ethyl]-1H-imidazole (imazalil). Suitable nitroanilines are in particular compounds of the type described in United States patent number 3,257,190, especially N-butyl-N-ethy]-2,6-dinitro-4-trifluoromethyl-aniline (benfluralin) or 2,6-dinitro-N,N-dipropyl-4-trifluoro-methyl aniline (trifluralin). Suitable nitroxylenes are in particular compounds of the type described in United States patent number 3,385,862, especially N-(1-ethylpropyl)-2,6-dinitro-3,4-xylidine (pendimethalin). Suitable organophosphorous compounds are in particular compounds of the type described in United States patent number 3,244,586, especially O,O-diethyl-O-(3,5,6-trichloro-2-pyridinyl)-phosphorothioate (chloropyrifos ethyl) and O,O-dimethyl-O-(3,5,6-trichloro-2-pyridyl)-phosphorothioate (chloropyrifos methyl); also the compounds described in Great Britain patent number 974,138, especially 1,3-dithiolan -2-ylidene-phosphorimidate (phospholan); also the compounds described in United States patents numbers 3,230,230 and 3,240,668, especially S-[{5-methoxy-2-oxo-1,3,4-thiadiazol-3-(2H)-yl}-methyl]-O,O-dimethyl-phosphoro-dithioate (methidathion); also the compounds described in United States patent number 3,205,253, especially O,O-diisopropyl-S-2-phenyl-sulphonyl-amino-ethyl-phosphoro-dithioate (bensulide); also the compounds described in United States patent number 2,978,479, especially ethyl-3-methyl-4-(methylthio)phenyl-isopropyl-phosphoramidate (fenamiphos). Suitable oxidiazoles are in particular compounds of the type described in United States patent number 3,385,862 especially 3-[2,4-dichloro-5-(1-methyl-ethoxy)-phenyl]-5-(1,1-dimethyl-ethyl)-1,3,4-oxadiazole-2-(3H)-one (oxadiazon). Suitable phenoxy-phenoxy-alkane-carboxy-lic acid derivatives are in particular compounds of the type described in West German patent number 2,136,828 and 2,223,804, especially methyl-2-[4-(2,4-dichloro-phenoxy)-phenoxy]-propanoate (diclofop methyl). Suitable pyrethroids are in particular compounds of the type described in Great Britain patent number 1,413,491 especially (3-phenoxy-phenyl)-methyl-3-(2,2-dichloro-ethenyl)-2,2-dimethyl-cyclopropane-carboxylate (permethrin) and cyano-(3-phenoxy-phenyl)-methyl-3-(2,2-dichloroethenyl)-2,2-dimethyl-cyclopropane-carboxylate (cypermethrin); also 2-methyl-biphenyl-3-yl-methyl-(Z)-(IRS)-cis-3-(2-chloro-3,3,3-trifluoro-prop-1-enyl)-2,2-dimethyl-cyclopropane-carboxylate (bifenthrin); also the compounds described in United States patent number 4,062,698, especially cyano-(3-phenoxy-phenyl)- methyl-(RS)-2-(4-chloro-phenyl)-3-methyl butyrate (fenvalerate). Suitable triazoles are in particular compounds of the type described in Israel patent number 73,450, especially 2-(4-chlorophenyl)-2-(1H)-(1,2,4- triazole -1-yl-methyl) hexanitrile (myclobutanil); the compounds described in Great Britain patent number 1,522,657, especially 1-[2-(2,4-dichlorophenyl)-4-propyl-1,3-dioxolan-2-yl-]-methyl-1H-1,2,4-triazole (propiconazole); and the compounds described in German Patent Number 2,324,010, especially B-(4-chlosophenoxy) -2-(1,1-dimethylethyl-1H-1,2,-4-triaz ole-1-ethanol (triadimenol).

The plasticizers useful in the present invention are rosin and rosin derivatives insoluble in water. By rosin derivatives insoluble in water there are included hydrogenated rosin, polymerized rosin, methyl esters of rosin or of hydrogenated rosin, glycerol ester of rosin or hydrogenated rosin, triethylene glycol esters of rosin or hydrogenated rosin and pentaerythratol esters rosin or hydrogenated rosin. Most preferred are rosin, the methyl ester of rosin, and the triethylene glycol ester of rosin.

In order that formulations of the present invention retain their ecological acceptability, it is preferable to use a surfactant in which the lipophillic part is a safe natural product. Such surfactants are usually found in use in the food and cosmetic industries.

The non-ionic surfactants of the present invention are those with an H.L.B. range of from 7 to 17, preferably from 10 to 15. Examples of such surfactants are alkoxylated triglycerides, the alkoxylated di- or tristyrylphenols, the alkoxylated alkyl phenols, the alkoxylated alcohols, the alkoxylated fatty alcohols, and alkoxylated sorbitol fatty esters. Preferred surfactants are alkoxylated triglycerides such as ethoxylated castor oil, ethoxylated propoxylated castor oil, and alkoxylated sorbitan fatty esters; and most preferred are ethoxylated castor oil and ethoxylated propoxylated castor oil.

Among the anionic surfactants of the present invention are the acid or neutralized forms of the phosphate esters of alkoxylated di- or tristyryl phenols, the sulphate, sulphonate, or phosphate esters of alkoxylated alkylphenols, the sulphate or phosphate esters of alkoxylated fatty alcohols, or metal salts of alkyl benzene sulfonic acids.

The polaric solvents are completely or partially soluble in water. Examples are straight or branched chained alcohols; glycols such as propylene glycol, dipropylene glycol, ethylene glycol, diethylene glycol, hexylene glycol and the like; polyglycols such as glycerol; glycol et hers such as propylene glycol monomethyl ether, dipropylene glycol monomethyl ether, propylene glycol monomethyl ether acetate, dipropylene glycol dimethyl ether, propylene carbonate and the like; ketones such as methyl cyclohexanone, methyl ethyl ketone, methyl isobutyl ketone and the like; and high solvent power polaric solvents such as γ-butyrolactone, N-methylpyrolidone and the like.

The novel formulations of the present invention may also contain:
- an antifreeze;
- an antifoam, such as polysyloxanes:
- auxiliary additives.

As conventional antifreeze agents can be mentioned agents such as propylene glycol, glycerol, diethylene glycol, triethylene glycol, urea, or ethylene glycol.

Auxiliary additives that may be used are oxidation and u.v. protectants, pH buffers, bactericides and A.I. stabilizers.

The concentrated EC formulations which are the object of the present invention, may be prepared by mixing one or more molten pesticidal active ingredients with one or more of the plasticizer, polaric solvents, and surfactants until homogeneous. The preparation of the concentrate may be carried out by using the production facilities of conventional facilities of conventional EC formulations.

These concentrated water emulsions of the present invention are stable physically and chemically in a temperature range from -14°C to 54°C, where no crystallization phenomena are observed during storage. They are also stable when diluted in water in rates of from 0.5% to 5% Vol/Vol, with no crystals, oils, or "cream" separators observed after standing for 24 hours at temperature of from 5°C to 30°C. These emulsions may also be used undiluted as ulv formulations or with low dilution (L.V. formulations).

The present invention is also of particular note, because the formulations related to it have a low degree of phytotoxicity compared to the commercial EC equivalents. They may also partially replace powder

4

formulations, avoiding in this way all the dust problems vis-a-vis the user.

The EC formulations of the present invention have the further advantages of being non-flammable and of being of low dermal toxicity and low skin irritation.

Finally, the EC formulations of the present invention can be considered ecotoxicologically safe, since they are prepared with safe inert ingredients. The result is not only useful formulations, but also formulations which can stand up to the stringent requirements of the EPA in the United States and the stiff European control of volatile organic compounds.

While the invention will now be described in connection with certain preferred embodiments in the following examples, it will be understood that it is not intended to limit the invention to these particular embodiments. On the contrary it is intended to cover all alternatives, modifications and equivalents as may be included within the scope of the invention, as defined by the appended claims. Thus, the following examples, which include preferred embodiments, will serve to illustrate the practice of this invention, it being understood that the particulars shown are by way of example and for purposes of illustrative discussion of preferred embodiments of the present invention only and are presented in the cause of providing what is believed to be the most useful and readily understood description of procedures as well as of the principles and conceptual aspects of the invention.

### EXAMPLE 1

An emulsifiable concentrate of prochloraz is prepared as follows: To 465 g of molten prochloraz were added 200 g at Granolite M (methyl ester of rosin ex D.R.T.), 176 g of Emulan EL (castor oil ethoxylated 36 Mol EO ex BASF), 50 g of n-Butanol, 50 g of Agsol Ex BLO (ex ISP) and 200 g of dipropylene glycol.

The ingredients were mixed together to form a homogenous clear liquid. This emulsifiable concentrate (EC) has the following characteristics:
- It is stable physically and chemically in a range of temperatures from -10°C to +54°C. (thermal stability tests were carried out according to CIPAC methods).
- It showed no crystallization with time.
- It is stable when diluted in water in rates from 0.5% to 5% V/V (emulsion stability tests were carried out according to CIPAC methods).

i.e.: No crystals, no oil or "cream" separation were observed after standing for 24 hours at temperatures from 5°C to 30°C.

### EXAMPLE 2 - COMPARATIVE

To 465 g of molten prochloraz were added 170 g of Emulan EL, 50 g at n-Butanol, 50 g of Agsol Ex BLO and 385 g of dipropylene glycol. The ingredients were mixed together to form a homogeneous clear liquid.

Although the physical and chemical characteristics of this emulsifiable concentrate were as in Example 1, when diluted in water at rates from 0.5% to 5% V/V at 20°C a large amount of crystal precipitate was observed. The crystals were chemically analyzed and found to be prochloraz.

### EXAMPLE 3

To 205 g of molten imazalil were added 200 g of Abalyn E, 200 g of Berol TL108 (castor oil ethoxylated, 40 Mol. EO) and 470 g of propylene glycol. The ingredients were mixed together to form a homogeneous clear liquid.

The characteristics of this EC are identical to those found in Example 1.

### EXAMPLE 4

To 100 g of molten Cypermethrine were added 200 g og Albalyn E, 150 g of Emulan EL and 530 g of P.M. (propylene glycol methyl ether).

The ingredients were mixed together to form a homogeneous clear liquid.

The characteristics of this EC are identical to those found in Example 1.

## EXAMPLE 5

An emulsifiable concentrate of ethyl chlorpyrifos was prepared as follows:

To 410 g of molten ethyl chlorpyrifos were added 400 g Granolite M, 87.5 g of Berol 917, 52.5 of Berol 822 (calcium epoxide dodecyl benzene sulfonate 60%, ex Berol), 10 g of Epoe, 30 g of Dipropylene glycol and 180 g of Agsol Ex BLO. The ingredients were mixed together to form an homogeneous clear liquid.

The characteristics of this EC are identical to those found in Example 8.

## EXAMPLE 6

An emulsifiable concentrate of triadimenol is prepared as follows:

200 g of Gum Rosin Pale 2A-WW was melted in the presence of 300 g of Agsol Ex 1 at about 100°C. The mixture was cooled to approximately 50°C, then 129 g of Triadimenol and 275 g of Emulan EL were added to it. The preparation was mixed until complete solubilization of the Triadimenol. Then 60 g of 1-butanol and 90 g of deionized water were added to the preparation. The ingredients were mixed together to form an homogeneous clear liquid. This emulsifiable concentrate has the same characteristics as those found in Example 1.

## EXAMPLE 7

Comparative toxicity trials were carried out with a commercial E.C. Prochloraz formulation (with aromatic solvent) and an nonaromatic E.C. formulation (hereinafter EC(NA)) which is objective of this invention (example 1). A summary of the results are listed here after.

| Product PROCHLORAZ | Commercial 45 EC (aromatic) | 45 EC (NA) (example 1) |
|---|---|---|
| LD$_{50}$ Oral (mg/kg) | >2000 | >2000 |
| LD$_{50}$ Dermal (mg/kg) | >2000 | >2000 |
| LD$_{50}$ Inhalation (mg/l) | >5.86 | >4.9 |
| Skin Irritation | Severe | Mild (0.5) |
| EEC | Irritant /R38 | Non |
| Eye Irritation | Severe | Mild (17.0) |
| EEC | Irritant /R41 | Non |

R38: Irritating to skin
R41: Risk of serious damage to eyes

The formulation of example 1 was clearly less irritant to skin and eyes compared to the commercial one.

## EXAMPLE 8

The formulations of Example 5 were used to form an oil in water emulsion by mixing the appropriate amount of formulation with water to apply 50 g of chlorpyrifos per 100 m$^2$ in spray volume of 100 liters per 1000m². The results were compared with the results of commercial chlorpyrifos 48 E.C. (Aromatic solvent). The emulsions were sprayed an vineyard against polychrosis botrana in 20 bunches were counted the number of contaminate berries. The results expressed as average number of infected spots per bunch and number of infected berries are shown in the Table.

TABLE

| BIOLOGICAL ACTIVITY OF VARIOUS FORMULATIONS OF CHLORPYRIFOS AGAINST POLYCHROSIS BOTRANA IN GRAPES | | |
|---|---|---|
| | Number of Infected Spots | Number of Infected Berries |
| Chlorpyrifos EC | 0.75 D | 1.25 D |
| Chlorpyrifos aromatic | 1.75 B | 4.00 CD |
| Untreated | 7.25 A | 34.00 A |

EXAMPLE 9

Insecticidal activity of chlorpyrifos formulations was tested at the Biological Institute on German cockroaches Blattella germanica (Dictyopera: Blattellidae) bred in the laboratory of the Ministry of Health in Jerusalem.

The pyrinex formulations tested are:
1. Regular sanitary formulation of 480 g/l a.i. EC.
2. Chlorpyrifos 250 g/l a.i. EC.
3. Untreated.

Procedure:

Ceramic tiles were dipped into an 0.5% a.i. solution of the formulation tested. After the water and solvent had evaporated from the surface, 2 tiles were placed on top of each other, separated by a cardboard, inside a plastic test cubicle. The test cubicle was 16 X 33 X 38.5 cm, with 4 air-openings, a sleeve to introduce food and water, covered by a glass plate. Each exposure experiment lasted 48 hours, with 4 repetitions on 25 to 50 cockroaches. This procedure avoided forced contact between the cockroach and the formulation-coated tile.

Results showing the activity of the different formulations are given in the Table below.

TABLE

| BIOLOGICAL ACTIVITY OF CHLORPYRIFOS AGAINST DICTYOPTERNA BLAITELLIDAE | | | | | | | |
|---|---|---|---|---|---|---|---|
| Application | Percent Mortality of the Roaches | | | | | | |
| | Number of Days After Spraying | | | | | | |
| | 14 | 28 | 42 | 56 | 77 | 91 | 107 |
| Chlorpyrifos | 100 | 97.3A | 92.9A | 83.2A | 84.8B | 84.9B | 53.6B |
| Chlorpyrifos aromatic | 100 | 86.3B | 57.6B | 29.4B | | | |
| Untreated | 0.9C | 1.0C | 0.0C | 0.0C | 0.0C | 0.0C | 0.0C |

**Claims**

1. An EC pesticidal formulation comprising:
   (a) 45 g/l to 675 g/l of at least one pesticide having melting point of 130°C or less;
   (b) 5 g/l to 525 g/l of a plasticizer selected from the group consisting of rosin or rosin derivatives insoluble in water;

(c) 40 g/l to 300 g/l of at least one surfactant; and

(d) at least one polaric solvent completely or partially soluble in water to make up to one liter.

**2.** A formulation in accordance with Claim 1, wherein the pesticide is chosen from the group consisting of acetanilides, benzoates, brominated benzilates, chlorinated benzilates, chlorinated hydrocarbons, hydroxybenzonitriles, imidazoles, nitroanilines, nitroxylenes, organophosphorous derivatives, phenoxy-phenoxy-alkane carboxylic acids, pyrethroids and triazoles.

**3.** A formulation in accordance with Claims 1 or 2, wherein the pesticide is chosen from the group consisting of acetanilides, chlorinated hydrocarbons, hydroxy-benzonitriles, imidazoles, organophosphorous derivatives, pyrethroids, and triazoles.

**4.** A formulation in accordance with any of Claims 1 to 3, wherein the pesticide is endosulfan.

**5.** A formulation in accordance with any of Claims 1 to 3, wherein the pesticide is prochloraz.

**6.** A formulation in accordance with any of Claims 1 to 3, wherein the pesticide is imazalil.

**7.** A formulation in accordance with any of Claims 1 to 3, wherein the pesticide is chloropyrifos.

**8.** A formulation in accordance with any of Claims 1 to 3, wherein the pesticide is cypermethrin.

**9.** A formulation in accordance with any of Claims 1 to 3, wherein the pesticide is propiconazole.

**10.** A formulation in accordance with any of Claims 1 to 3 wherein the pesticide is triadimenol.

**11.** A formulation in accordance with any of Claims 1 to 10 wherein the rosin derivatives are selected from the group consisting of rosin esters such as the methyl ester of rosin, the glycerol ester of rosin, the triethhylene glycol ester of rosin, and the hydrogenated esters of rosin.

**12.** A formulation in accordance with any of Claims 1 to 11, wherein the rosin derivatives are the methyl ester of rosin or the triethylene glycol ester of rosin.

**13.** A formulation in accordance with any of Claims 1 to 12, wherein the surfactant is chosen from the group consisting of alkoxylated triglycerides, alkoxylated di- or tristyryl-phenols, alkoxylated lated alkylphenols, alkoxylated fatty amines, alkoxylated fatty alcohols, alkoxylated sorbitol fatty esters and the acid or neutralized forms of phosphate esters of alkoxylated di- or tristryrylphenols, sulphate, sulphonate or phosphate esters of alkoxylated alkylphenols, or sulphate or phosphate esters of alkoxylated fatty alcohols.

**14.** A formulation in accordance with any of Claims 1 to 13, wherein the surfactant is chosen from the group consisting of ethoxylated castor oil, and alkoxylated butyl alcohol.

**15.** A formulation in accordance with any of Claims 1 to 14, wherein the polaric solvent is selected from the group consisting of straight or branched chain alcohols, glycols such as propylene glycol, dipropylene glycol, ethylene glycol, diethylene glycol, hexylene glycol and the like; polyglycols such as glycerol ethers such as propylene glycol monomethyl ether, dipropylene glycol monomethyl ether, propylene glycol monomethyl ether acetate, dipropylene glycol dimethyl ether, propylene carbonate and the like; ketones such as methyl cyclohexanone, methyl ethyl ketone, methyl isobutyl ketone and the like; and high solvent power polaric solvents such as -butyrolactone, N-methyl pyrolidine and the like.

**16.** A formulation in accordance with any of Claims 1 to 15, wherein the polaric solvent is selected from the group consisting of n-butanol, dipropylene glycol, propylene glycol, propylene glycol methyl ether, propylene glycol monomethyl ether acetate and -butyrolactone.

**17.** An EC pesticidal formulation comprising:

(a) 45 g/l to 675 g/l of at least one pesticide having melting point of 130°C or less;

(b) 5 g/l to 525 g/l of at least a plasticizer selected from the group consisting of rosin, the, methyl ester of rosin, the glycol ester of rosin, the trimethylene glycol ester of rosin and the hydrogenated esters of rosin;

(c) 40 g/l to 300 g/l of at least one surfactant chosen from the group consisting of ethoxylated castor oil, and alkoxylated butyl alcohol; and

(d) at least one polaric solvent completely or partially soluble in water to make up to one liter.

18. A formulation in accordance with Claim 17, wherein the pesticide is chosen from the group consisting of acetanilides, benzoates, brominated benzilates, chlorinated benzilates, chlorinated hydrocarbons, hydroxybenzonitriles, imidazoles, nitroanilines, nitroxylenes, organophosphorous derivatives, phenoxy-phenoxy-alkane carboxylic acids, pyrethroids and triazoles.

19. A formulation in accordance with Claims 17 or 18, wherein the pesticide is chosen from the group consisting of acetanilides, chlorinated hydrocarbons, hydroxy-benzonitriles, imidazoles, organophosphorous derivatives, pyrethroids and triazoles.

20. A formulation in accordance with any of Claims 17 to 19, wherein the pesticide is endosulfan.

21. A formulation in accordance with any of Claims 17 to 19, wherein the pesticide is prochloraz.

22. A formulation in accordance with any of Claims 17 to 19, wherein the pesticide is imazalil.

23. A formulation in accordance with any of Claims 17 to 19, wherein the pesticide is chloropyrifos.

24. A formulation in accordance with any of Claims 17 to 19, wherein the pesticide is cypermethrin.

25. A formulation in accordance with any of Claims 17 to 19, wherein the pesticide is propiconazole.

26. A formulation in accordance with any of Claims 17 to 19 wherein the pesticide is triadimenol.

27. A formulation in accordance with any of Claims 17 to 19, wherein the active ingredient is prochloraz.

28. A formulation in accordance with any of Claims 17 to 27, wherein the rosin derivatives are the methyl ester of rosin or the triethylene glycol ester of rosin.

29. A formulation substantially as hereinbefore described and with reference to the examples.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | CENTRAL PATENTS INDEX, BASIC ABSTRACTS JOURNAL Week 7814, Derwent Publications Ltd., London, GB; AN 78-26428A & JP-A-53 020 431 (TOHO CHEM IND) 24 February 1978 * abstract * | 1-29 | A01N25/02 |
| A | WO-A-91 17657 (DARATECH) 28 November 1991 * claims 1-6,9,10 * * page 4, line 19 - line 24 * * page 5, line 4 - line 12 * | 1-29 | |
| A | CHEMICAL PATENTS INDEX, DOCUMENTATION ABSTRACTS JOURNAL Week 9022, Derwent Publications Ltd., London, GB; AN 90-167886 & JP-A-02 108 602 (TOSOH CORP) 20 April 1990 * abstract * | 1-29 | |
| A | US-A-2 588 318 (P.B. BENIGNUS) 4 March 1952 * column 2 - column 3 * | 1,11,12 | **TECHNICAL FIELDS SEARCHED** (Int.Cl.6)<br><br>A01N |

The present search report has been drawn up for all claims

| Place of search | Date of completion of the search | Examiner |
|---|---|---|
| THE HAGUE | 3 August 1994 | Decorte, D |

EPO FORM 1503 03.82 (P04C01)